# EUROPÄISCHE PATENTSCHRIFT

(11) **EP 0 787 088 B1**
(45) Veröffentlichungstag und Bekanntmachung des Hinweises auf die Patenterteilung: **11.08.1999**
(21) Anmeldenummer: 95928997.6
(22) Anmeldetag: 29.08.1995
(51) Int. Cl.: B61H 7/08

(54) **ELEKTRO- ODER PERMANENTMAGNETISCHE SCHIENENBREMSE**
ELECTRO OR PERMANENT-MAGNETIC RAIL BRAKE
FREIN SUR RAIL A ELECTRO-AIMANT OU A AIMANT PERMANENT

(30) Priorität: 28.10.1994 DE 4438609
(43) Veröffentlichungstag der Anmeldung: 06.08.1997
(73) Patentinhaber: KNORR-BREMSE Systeme für Schienenfahrzeuge GmbH, 80809 München (DE)
(72) Erfinder: KRÖGER, Uwe, D-80993 München (DE); GRAUTSTÜCK, Heinrich, D-80993 München (DE); WIRTH, Wolfgang, D-93049 Regensburg (DE)
(86) Internationale Anmeldenummer: DE9501153
(87) Internationale Veröffentlichungsnummer: WO9613419

(56) Entgegenhaltungen:
- FR-A- 802 215
- FR-A- 2 366 970

## Beschreibung

Die Erfindung betrifft eine elektro- oder permanentmagnetische Schienenbremse, insbesondere eine lineare Wirbelstrombremse für Schienenfahrzeuge, nach dem Oberbegriff ds Anspruchs 1.

In der neuzeitlichen Rad-/Schiene-Technik besteht Bedarf an Bremstechnologien mit einer möglichst weitgehend vom Haftwert Rad/Schiene unabhängigen Bremskraft. Lineare Wirbelstrombremsen erfüllen diese Anforderung naturgemäß in idealer Weise, denn als berührungslose Betriebsbremsen sind sie absolut haftwertunabhängig.

Eine kurze Einführung in die Technologie der Wirbelstrombremsen für Schienenfahrzeuge - deren Funktion auf dem Induktionsgesetz basiert - findet sich beispielsweise in dem Buch von Saumweber et al "AET - Archiv für Eisenbahntechnik, Hestra-Verlag, Bd. 43, Kap. 2.5.2". Wirbelstrombremsen bestehen aus einem Eisenjoch mit mehreren Polkernen. Elektrische Spulen erregen die Bremse magnetisch derart, daß alternierend magnetische Nord- und Südpole entstehen. Bei Bewegung der erregten Wirbelstrombremse über die Schiene - d.h. bei einer Bremsung - ergeben sich durch die zeitlichen Flußänderungen elektromagnetische Felder und Wirbelströme. Das sekundäre, durch die Wirbelströme hervorgerufene, Magnetfeld ist dem Magnetfeld der Bremse entgegengerichtet. Die sich daraus ergebende, entgegengesetzt zur Fahrtrichtung wirkende, horizontale Kraftkomponente ist die Bremskraft.

Der praktische Einsatz von Wirbelstrombremsen in großer Serie wird trotz des großen Vorteils dieser Bremse, der Berührungsfreiheit gegenüber der Schiene, durch die in Teilbereichen noch optimierbare Kompatibilität der Bremse mit den bestehenden Betriebseinrichtungen verschiedener Bahnbetreiber verzögert.

Ein beim praktischen Einsatz zu großen Schwierigkeiten führendes Problem der vorstehenden Art ist der Störeinfluß der Wirbelstrombremsen auf elektromagnetische Achszähler und/oder ähnliche Sensoreinrichtungen.

In der EP 0 309 651 wird dieses Problem näher beschrieben. Ein Großeil der derzeit bestehenden Streckenabschnitte verschiedenster Eisenbahnbetreiber weist demnach Schienen auf, die seitlich unterhalb der Schienenoberfläche mit Achszählsensoren versehen sind. I. allg. werden zur Achszählung elektromagnetische Sensoren verwendet, d.h. ein Sender sendet ein elektromagnetisches Wechselfeld (mit einer Frequenz von 5 bis typischerweise 43 kHz) aus, und ein auf der gegenüberliegenden Seite der Schiene angeordneter Sensor registriert beim Überfahren des Sensors mit einem Metallrad durch das Metallrad verursachte Änderungen des elektrischen Feldes in Amplitude und Richtung als Zählimpulse. Ein die Sensoranordnungen passierender Zug löst mit jeder durchfahrenden Achse bzw. jedem durchfahrenden Rad einen Zählimpuls in den Sensoren aus. Werden beim Durchfahren örtlich voneinander getrennter Achszähler verschiedene Zählergebnisse registriert, wird der Gleisabschnitt für den nachfolgenden Zug gesperrt.

Da Wirbelstrombremsen während einer Bremsung aus einer Hochlage in eine Tieflage kurz über der Schiene abgesenkt werden, können sie beim Bremsen ebenfalls Zählimpulse in den Achzählsensoren auslösen. Problematisch ist allerdings, daß sie nur in ihrer Tieflage (also beim Bremsen) Zählimpulse auslösen, in ihrer Hochlage dagegen nicht. Wirbelstrombremsen können das Ergebnis einer Achszählung daher verfälschen und ohne Grund zu einem Stopp des Zuges führen.

Die EP 0 309 651 A2 schlägt zur Lösung dieses Problems vor, im Bereich der unteren Längskanten jeder Spule des Bremsmagneten außen Leitbleche aus ferromagnetischem Material anzubringen. Diese Leitbleche erstrecken sich jeweils über die unteren Eckkanten der Polspule. Die vorgeschlagene Lösung schafft zwar eine Linderung des Problems, Fehlsignale sind jedoch nicht so auszuschliessen, wie es ein geregelter Bahnbetrieb erfordert.

Aus der östereichischen Patentschrift 317 290 ist eine Magnetschienenbremse bekannt, bei der eine sich über die Länge der Magnetschienenbremse erstreckende Stange aus ferromagnetischen Material störende Einflüsse abschwächt. Auch diese Lösung genügt nicht den Anforderungen eines Hochgeschwindigkeitsverkehrs an die Störungsfreiheit des Bahnbetriebes.

Der Erfindung liegt das Problem zu Grunde, eine elektro- oder permanentmagnetische Schienenbremse - insbesondere eine Wirbelstrombremse - für Schienenfahrzeuge zu schaffen, welche Sensoreinrichtungen wie Achszähler bei Bremsvorgängen nicht stört.

Die Erfindung löst dieses Problem durch den Gegenstand des Anspruches 1.

Die Erfindung realisiert insbesondere eine Wirbelstrombremse für Schienenfahrzeuge mit wenigstens einer Polspule, die eine um einen Polkern geführte Spule sowie eine Einrichtung zur Halterung der Spule und/oder zum Schutz gegen äußere Umwelteinflüsse aufweist, wobei der Polkern und/oder die Schutzeinrichtung aus elektrisch zumindest weitgehend gegeneinander isolierten Einzelkomponenten zusammengesetzt ist.

Die Unterteilung in separate Einzelkomponenten unterbricht die Übertragung eines Sendesignals von einem Sender auf der einen Seite der Schiene zu einem Empfänger auf der anderen Seite der Schiene derart, daß praktisch keine Störsignale mehr auftreten und ein Einsatz der Wirbelstrombremse im weitaus größten Teil der bestehenden Streckennetze möglich wird. Die im Grunde konstruktiv einfach Maßnahme verhindert effektiv Störsignale. Die Erfindung schafft damit einen entscheidenden Schritt in Richtung einer Marktdurchsetzung der technisch vorteilhaften Wirbelstrombremstechnologie.

Ein Großteil der heute im praktischen Einsatz befindlichen Achszähler ist derart ausgelegt, daß ein den Sensor durchfahrendes Metallrad im Empfängerabschnitt eine deutlich registrierbare Spannungsänderung, z.B. bei einer Ausführungform des Sensors eine Spannungserhöhung. Diese Wirkung wird durch die Erfindung verhindert, es kann bei dieser Variante sogar eine Signalabschwächung durch die erfindungsgemäße Bremse erfolgen. Zählimpulse werden nicht mehr ausgelöst.

Nach einer weiteren besonders bevorzugten Ausführungsform der Erfindung ist die Schutzeinrichtung als mehrteiliges Metallgehäuse ausgelegt, wobei die einzelnen Metallabschnitte in Einbaustellung der Bremse, bei der die Bremsenlängsachse im wesentlichen längs der Schienenlängsachse ausgerichtet ist, gegeneinander isoliert sind (siehe Anspruch 2). Entsprechend ist es vorteilhaft, wenn der Polkern wenigstens zwei, in der Einbaustellung der Bremse im wesentlichen gegeneinander isolierte, Metallplatten aufweist (siehe Anspruch 3). Aufgrund des Skin-Effektes erfolgt die Wellenübertragung im wesentlichen an der Oberfläche der Metallkomponenten. Die Unterteilung in Einzelschichten unterbricht diese Übertragrung effektiv.

Nach einer weiteren besonders bevorzugten Ausführungsform der Erfindung ist wenigstens eine der Metallplatten ferromagnetisch (siehe Anspruch 4). Zum Erreichen guter elektrischer Übertragungseigenschaften kann Stahl gewählt werden. Die Metallplatten werden dabei in einer Ebene senkrecht zur Schienenlängsachse angeordnet.

Bei einer weiteren besonders bevorzugten Ausführungsform sind Stahlplatten des Polkerns durch Trafobleche voneinander getrennt (siehe Anspruch 5), z.B. werden fünf Stahlplatten und vier Trafobleche eingesetzt. Diese Ausführungsform erzielt sehr gute Ergebnisse bzgl. der Störungsfreiheit von Achszählern ohne an die Herstellung des Polkerns konstruktiv so hohe Anforderungen zu stellen, daß aus Kostengründen eine Realisierung des Produktes erschweren würde.

Zum Schutz der Spulen wird i.allg. ein Metallgehäuse eingesetzt. Erfindungsgemäß hat es sich als besonders vorteilhaft herausgestellt, wenn das Metallgehäuse quer zur Längsachse der Bremse geöffnete Seitenflächen aufweist (siehe Anspruch 6). Die teilweise geöffneten Seitenflächen wirken sich ebenfalls vorteilhaft auf die Feldverteilung aus (Kurzschlußwirkung) und unterstützten die Wirkung des geblechten Kerns. Bei weiteren vorteilhaften Varianten der Erfindung ist wenigstens eine Polspule in einem Kunststoffgehäuse aus GFK angeordnet (siehe Anspruch 7), mittels eines henkelförmigen Tragemittels an einem Bremsträger befestigt (siehe Anspruch 8) und/oder die Metallplatten sind miteinander verschraubt und/oder verklebt (siehe Anspruch 9), also nichtleitend mechanisch miteinander verbunden.

Mit der Erfindung läßt sich auf vorteilhafte Weise eine Wirbelstrombremse (bzw. ein Schienenfahrzeug mit einer derartigen Bremse) verwirklichen, die den Anforderungen an die Störungsfreiheit verschiedenster Hochgeschwindigkeitsstrecken wie ICE und TGV genügt.

Nachfolgend wird die Erfindung unter Bezug auf die Zeichnung anhand von Ausführungsbeispielen näher beschrieben, wobei auch weitere Vorteile und Möglichkeiten der Erfindung deutlich werden. Es zeigt:
Fig. 1 eine Seitenansicht eines ersten Ausführungsbeispiels einer erfindungsgemäßen Wirbelstrombremse;
Fig. 2 eine Schnittansicht längs der Linie A-A' des Ausführungsbeispiels aus Fig. 1;
Fig. 3 eine Draufsicht auf einen schematisch dargestellten, erfindungsgemäß aufgebauten Polkern nach einem weiteren Ausführungsbeispiel der Erfindung;
Fig. 4 eine teilweise geschnittene Seitenansicht des Polkerns aus Fig. 3;
Fig. 5 eine teilweise geschnittene Seitenansicht eines weiteren Ausführungsbeispiels einer erfindungsgemäßen Polspule;
Fig. 6 eine Draufsicht auf die Polspule aus Fig. 5.

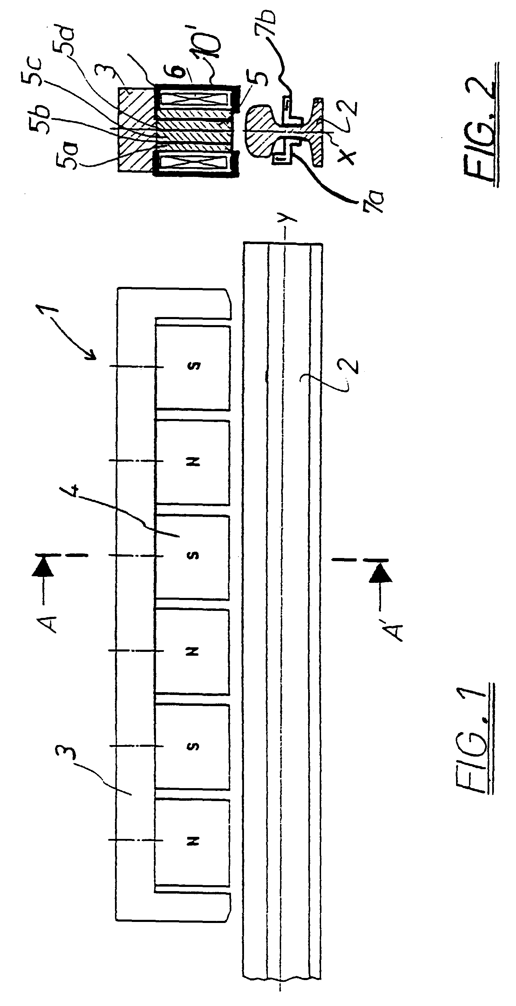

Zunächst sei das Ausführungsbeispiel der Fig. 1 beschrieben. Fig. 1 zeigt eine Wirbelstrombremse 1, die an einem (nicht dargestellten) Drehgestell befestigbar ist. Die Wirbelstrombremse wird bei einem Bremsvorgang des Zuges mit geringem Abstand parallel zu einer Schiene 2 gehalten. Sie weist einen Träger 3 auf, an dem alternierend in Nord-/Südfolge magnetisierbare Polspulen 4 angeordnet sind. Die Gesamtheit der Polspulen 4 mit dem Träger 3 wird auch als "Bremsmagnet" bezeichnet.

Fig. 2 verdeutlicht anhand einer Schnittansicht längs der Linie A-A' aus Fig. 1 den Aufbau und die Einbaustellung einer der Polspulen 4. Die Schnittansicht zeigt einen Metallkern 5, um den Spulenwicklungen 6 gewickelt sind. Der Metallkern 5 weist wiederum mehrere Einzelmetallplatten 5a, 5b usw. auf. Der Metallkern 5 ist derart am Träger 3 angeordnet, daß die einzelnen Metallplatten 5a, 5b in der Verlängerung der Schienenachse X in oder parallel zu der durch die Schienenachsen X und Y definierten Ebene liegen. Seitlich der Schiene 2 ist schematisch eine Sensoreinrichtung 7 mit einem Senderteil 7a und einem Empfängerteil 7b dargestellt.

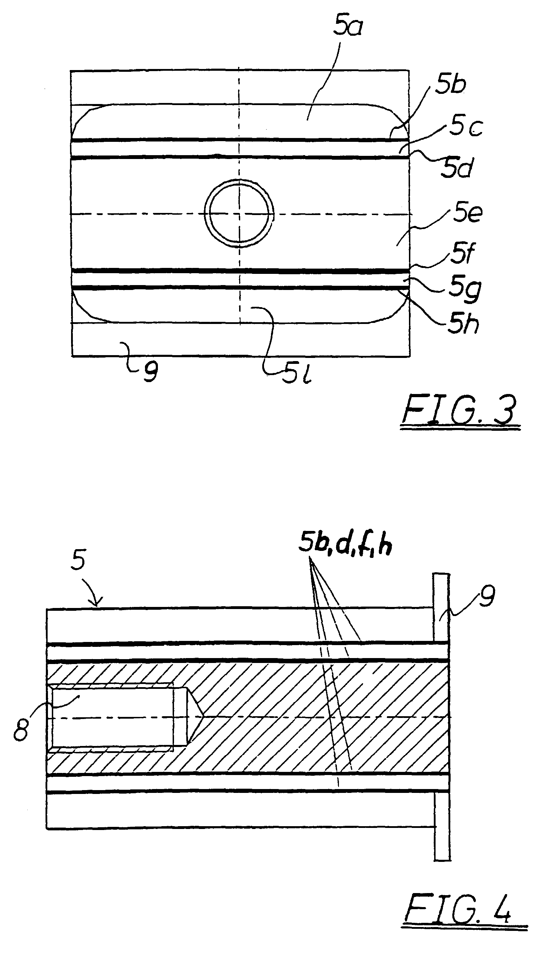

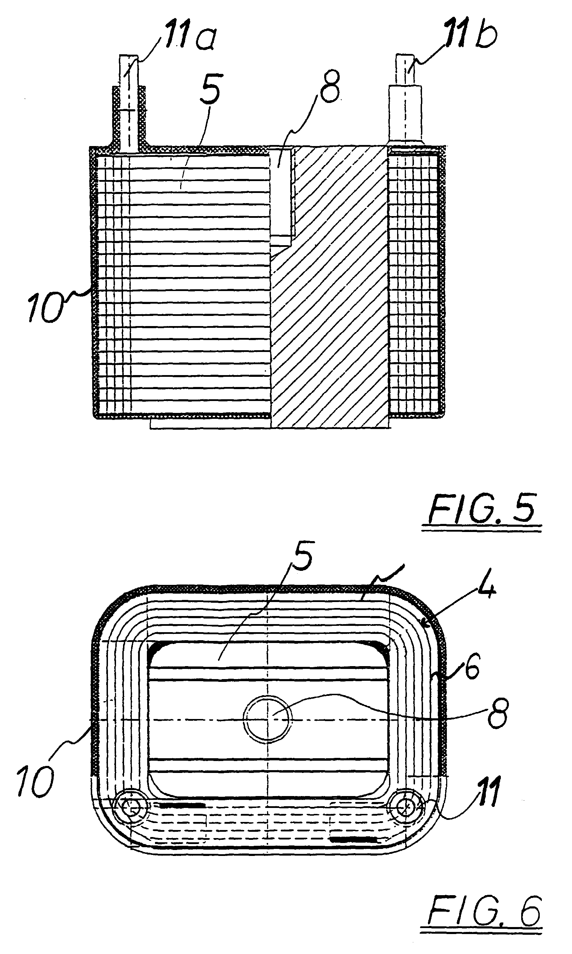

Fig. 3 und 4 zeigen ein Ausführungsbeispiel eines Spulenkerns 5 einer erfindungsgemäßen Wirbelstrombremse, der aufgrund einer Blechung aus Einzelmetallplatten 5a - 5i besonders gute, d.h. Störsignale in den Achszählern 7 vermeidende, elektromagnetische Übertragungseigenschaften hat. Die Metallplatten 5a, 5c, 5e, 5g, 5i des Polkerns 5 sind als Stahlplatten und die Metallschichten 5b, 5d, 5f, 5h als Trafobleche - d.h. als Bleche mit ferromagnetischer Eigenschaft - ausgelegt. Die mittlere Stahlplatte 5e ist besonders stark und verleiht dem Polkern Festigkeit. Eine Gewindebohrung 8 dient zum Befestigen des Polkerns am Träger 3 mittels eines (nicht dargestellten) Schraubbolzens. Eine (ggf. mehrteilige) Grundplatte 9 trägt die Spule 6 (siehe Fig. 5 und 6).

Fig. 5 und 6 veranschaulichen die Einbaulage der in einem Gehäuse (bzw. Kasten) 10 (Schutzeinrichtung) aus glasfaserverstärktem Kunststoff (GFK) angeordneten Polspule 4. Gut zu erkennen ist der geschichtete Aufbau des Spulenkerns 5 nach Art der Fig. 3 und 4. Schematisch angedeutet sind die den Spulenkern 5 umgebenden Spulenwindungen 6 der Polspule 4 zu erkennen. Das Kunststoffgehäuse 10 umschließt die Polspule 4 ringsum. Anschlüsse 11a und 11b dienen zur Zuleitung elektrischer Energie.

Wird anstelle des Kunststoffgehäuses 10 eine metallene Schutzeinrichtung verwendet, ist es vorteilhaft, diese quer zur Schiene seitlich zu öffnen oder nach Art der Fig. 1 als Doppelbügel 10' auszulegen, welche die Polspule 4 längs der Schiene einfassen, quer zur Schiene aber räumlich voneinander getrennt und damit elektrisch gegeneinander isoliert sind. In Fig. 1 ist als Schutzeinrichtung anstelle eines Gehäuses eine derartige bügelartige Doppeleinfassung 10' zum Schutz gegen äußere Umwelteinflüsse wie Steinschlag und zur Befestigung der Polspule 4 vorgesehen. Die Bügeleinfassung 10' ist an ihrer Unterseite, also in Einbaustellung zur Schiene nach hin, sowie quer zur Schiene (also in einem Bereich, in dem die Polspulen 4 bereits an sich dicht nebeneinander liegen), offen.

### Bezugszeichenliste

- Wirbelstrombremse: 1
- Schiene: 2
- Träger: 3
- Polspule: 4
- Polkern: 5
- Metallschicht: 5a-h
- Wicklung: 6
- Sensoreinrichtung: 7
- Senderteil: 7a
- Empfangsteil: 7b
- Bohrung: 8
- Grundplatte: 9
- GFK-Gehäuse: 10
- Metallbügel: 10'
- Anschlüsse: 11a,b

## Patentansprüche

1. Elektro- oder permanentmagnetische Schienenbremse, insbesondere lineare Wirbelstrombremse (1) für Schienenfahrzeuge, mit wenigstens einer Polspule (4), die eine um einen Polkern (5) geführte Spule (6) sowie eine Einrichtung (10) zur Halterung und/oder zum Schutz der Spule (6) aufweist, dadurch gekennzeichnet, daß der Polkern (5) und/oder die Einrichtung (10) wenigstens zwei elektrisch zumindest weitgehend gegeneinander isolierte Einzelkomponenten aufweist.

2. Bremse nach Anspruch 1, dadurch gekennzeichnet, daß die Einrichtung (10) als mehrteiliges Metallgehäuse ausgelegt ist, wobei die einzelnen Metallabschnitte in Einbaustellung der Bremse, in der die Bremsenlängsachse im Wesentlichen längs der Schienenlängsachse ausgerichtet ist, gegeneinander elektrisch isoliert sind.

3. Bremse nach Anspruch 1 oder 2, dadurch gekennzeichnet, daß der Polkern (5) wenigstens zwei, in der Einbaustellung der Bremse im Wesentlichen gegeneinander elektrisch isolierte, Metallplatten (5a-5i) aufweist.

4. Bremse nach Anspruch 3, dadurch gekennzeichnet, daß wenigstens eine der Metallplatten (5a-i) ferromagnetisch ist.

5. Bremse nach Anspruch 3 oder 4, dadurch gekennzeichnet, daß die Metallplatten (5a - 5i) jeweils aus Stahlplatten (5a, 5c, 5e, 5g, 5i) und Metallschichten (5b, 5d, 5f, 5h) bestehen, wobei die Metallschichten als Trafobleche gestaltet sind, die die Stahlplatten voneinander trennen.

6. Bremse nach einem oder mehreren der Ansprüche 1 bis 5, dadurch gekennzeichnet, daß das Metallgehäuse (10) quer zur Längsachse der Bremse geöffnete Seitenflächen aufweist.

7. Bremse nach Anspruch 1, dadurch gekennzeichnet, daß die Schutzeinrichtung als Kunststoffgehäuse, insbesondere aus glasfaserverstärktem Kunststoff (GFK), ausgelegt ist.

8. Bremse nach einem oder mehreren der vorstehenden Ansprüche, dadurch gekennzeichnet, daß die Schutzeinrichtung (10) als henkelförmiges Tragemittel ausgelegt ist, mit dem die wenigstens eine Polspule (4) an einem Bremsträger (3) oder an einem der Polkerne (5) befestigt ist.

9. Bremse nach einem oder mehreren der vorstehenden Ansprüche, dadurch gekennzeichnet, daß die Metallplatten (5a-i) mechanisch miteinander verbunden, insbesondere verschraubt und/oder verklebt sind.

10. Schienenfahrzeug zum Befahren von Strecken, deren Schienen mit Sensoreinrichtungen (7), insbesondere Achszählern versehen sind, gekennzeichnet durch eine elektro- oder eine permanentmagnetische Schienenbremse, insbesondere eine Wirbelstrombremse (1), nach einem oder mehreren der Ansprüche 1 bis 9.

## Claims

1. Electro- or permanent-magnetic rail brake, particularly a linear eddy current brake (1) for rail vehicles, comprising at least one pole coil (4) having a coil (6) wound around a pole core (5) and a means (10) for holding and/or for protecting said coil, characterised in that said pole core (5) and/or said means (10) comprises at least two individual components which are at least largely electrically insulated from each other

2. Brake according to Claim 1, characterised in that said means (10) is designed as multi-part metal housing, with the individual metal sections being electrically insulated form each other in the mounting position of the brake in which the longitudinal brake axis is substantially oriented along the longitudinal rail axis.

3. Brake according to Claim 1 or 2, characterised in that said pole core (5) comprises at least two metal plates (5a - 5i) substantially electrically insulated form each other in the mounting position of the brake.

4. Brake according to Claim 3, characterised in that at least one of said metal plates (5a - i) is ferromagnetic.

5. Brake according to Claim 3 or 4, characterised in that each of said metal plates (5a - 5i) consists of steel plates (5a, 5c, 5e, 5g, 5i) and metal layers (5b, 5d, 5f, 5h), with said metal layers being designed as transformer sheets which separate said steel plates from each other.

6. Brake according to any one or several of the Claims 1 to 5, characterised in that said metal housing (10) presents lateral surfaces open transversely with respect to the longitudinal axis of the brake.

7. Brake according to Claim 1, characterised in that said protective means is designed as plastic housing, in particular a housing made of glass-fibre reinforced plastic material (GFK).

8. Brake according to any one or several of the preceding Claims, characterised in that said protective means (10) is designed as handle-shaped carrying means which serves for mounting said at least one pole coil (4) on a brake support (3) or on one of said pole cores (5).

9. Brake according to any one or several of the preceding Claims, characterised in that said metal plates (5a - i) are mechanically connected to each other, particularly by screwing and/or adhesively.

10. Rail vehicle for rolling along railway lines including rails provided with sensor means (7), particularly axle counters, characterised by an electro- or permanent-magnetic rail brake, particularly an eddy current brake (1), in accordance with any one or several of the Claims 1 to 9.

## Revendications

1. Frein sur rail électromagnétique ou à aimant permanent, notamment frein linéaire à courants de Foucault (1) pour véhicules sur rail, comprenant au moins une bobine polaire (4), qui présente une bobine (6) guidée autour d'un noyau polaire (5) ainsi qu'un dispositif (10) destiné au support et/ou à la protection de la bobine (6), caractérisé en ce que le noyau polaire (5) et/ou le dispositif (10) présentent au moins deux composants individuels isolés électriquement, au moins dans une large mesure, l'un par rapport à l'autre.

2. Frein selon la revendication 1, caractérisé en ce que le dispositif (10) est réalisé en tant que carter métallique en plusieurs parties, les tronçons métalliques individuels étant isolés électriquement les uns par rapport aux autres, dans la position montée du frein, dans laquelle l'axe longitudinal du frein est orienté sensiblement le long de l'axe longitudinal du rail.

3. Frein selon la revendication 1 ou 2, caractérisé en ce que le noyau polaire (5) présente au moins deux plaques métalliques (5a-5i) sensiblement isolées électriquement les unes par rapport aux autres dans la position montée du frein.

4. Frein selon la revendication 3, caractérisé en ce que l'une au moins des plaques métalliques (5a-i) est ferromagnétique.

5. Frein selon la revendication 3 ou 4, caractérisé en ce que les plaques métalliques (5a-5i) sont constituées respectivement de plaques d'acier (5a, 5c, 5e, 5g, 5i) et de couches métalliques (5b, 5d, 5f, 5h), les couches métalliques étant conçues en tant que tôles de transformateur, qui séparent les plaques d'acier les unes des autres.

6. Frein selon l'une ou plusieurs des revendications 1 à 5, caractérisé en ce que le carter métallique (10) présente des faces latérales ouvertes transversalement à l'axe longitudinal du frein.

7. Frein selon la revendication 1, caractérisé en ce que le dispositif de protection est réalisé en tant que carter en matière plastique, notamment en matière plastique renforcée de fibres de verte (GFK).

8. Frein selon l'une ou plusieurs des revendications précédentes, caractérisé en ce que le dispositif de protection (10) est réalisé en tant que moyen de support en forme d'anse, à l'aide duquel ladite au moins une bobine polaire (4) est fixée à un support de frein (3) ou à l'un des noyaux polaires (5).

9. Frein selon l'une ou plusieurs des revendications précédentes, caractérisé en ce que les plaques métalliques (5a-i) sont reliées mécaniquement les unes aux autres, notamment par vissage et/ou collage.

10. Véhicule sur rails destiné à circuler sur des voies dont les rails sont équipés de dispositifs de capteurs (7), notamment de compteurs d'essieux, caractérisé par un frein sur rail électromagnétique ou à aimant permanent, notamment un frein à courants de Foucault (1) selon l'une ou plusieurs des revendications 1 à 9.
